# EUROPEAN PATENT APPLICATION

(11) **EP 1 622 309 A2**
(43) Date of publication of application: **01.02.2006**
(21) Application number: 05253194.4
(22) Date of filing: 25.05.2005
(51) Int. Cl.: H04L 12/26, H04L 29/06

(54) **Method and system for treating events and data uniformly**

(30) Priority: 30.07.2004 US 909051
(71) Applicant: Agilent Technologies, Inc., Palo Alto, CA 94306 (US)
(72) Inventor: Hamilton, Bruce, Menlo Park, CA 94025 (US); Eidson, John C., Palo Alto, CA 94303 (US)
(74) Representative: Exell, Jonathan Mark

(57) **Abstract**

Information (300) that includes both a time component (302) and a value component (304) is collected. The time component (302) provides time and duration information associated with the value component (304). The value component (304) includes one or more attributes, such as, for example, quantity, magnitude, and model parameters. The information (300) is then transmitted over a connection (406) to one or more downstream entities (404, 408). The one or more downstream entities (404, 408) may then determine whether to use all or a portion of the collected information (300).

## Description

### BACKGROUND

In a number of fields, including network management, communications, and system and instrument design, "events" are generally treated differently from "data." "Events" typically are occurrences of attributes or instants in time while "data" are the values or magnitudes of various attributes. The distinction between "events" and "data" can be seen in a variety of applications. For example, a voltmeter measures the voltage level for an attribute (e.g. a test point) without noting when or for how long the attribute is at a particular level.

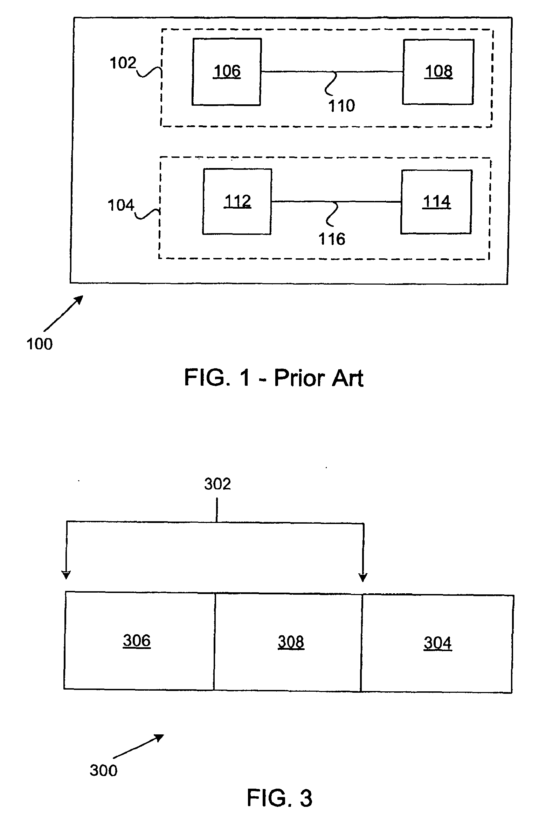

FIG. 1 is a block diagram of a prior art system. System 100 includes two sub-systems 102, 104 which handle "event" and "data" information separately. Sub-system 102 is typically a general computing and communications system which operates on the values of various attributes. Device 106 collects "data" information and transmits the information to device 108 over connection 110. Connection 110 is typically configured as a high latency, high throughput connection.

Sub-system 104 is generally known as a fault detection or event propagation system and often resides adjacent to sub-system 102. Sub-system 104 detects the occurrence of an "event" and alerts operators or other devices to the occurrence of the event. Device 112 collects "event" information and transmits the information to device 114 over connection 116. Connection 116 is typically configured as a low latency, low throughput connection.

Constructing and maintaining two separate sub-systems often results in inefficient and more expensive systems. Furthermore, the decisions regarding what constitutes an "event" and "data" are made at design time. Consequently, additional information surrounding an "event" or "data" is not captured and opportunities for further analysis or investigation are lost.

### SUMMARY

In accordance with the invention, a method and system for treating events and data uniformly are provided. Information that includes both a time component and a value component is collected. The time component provides time and duration information typically associated with the value component. The value component includes one or more attributes, such as, for example, quantity, magnitude, and model parameters. The information is then transmitted over a connection to one or more downstream entities. The one or more downstream entities may then determine whether to use all or a portion of the collected information.

### BRIEF DESCRIPTION OF THE DRAWINGS

The invention will best be understood by reference to the following detailed description of embodiments in accordance with the invention when read in conjunction with the accompanying drawings, wherein:
FIG. 1 is a block diagram of a prior art system;
FIG. 2 is a flowchart of a method for treating events and data uniformly in an embodiment in accordance with the invention;
FIG. 3 is a graphical illustration of information in an embodiment in accordance with the invention;
FIG. 4 is a block diagram of a first system for treating time and value components uniformly in an embodiment in accordance with the invention; and
FIG. 5 is a block diagram of a second system for treating time and value components uniformly in an embodiment in accordance with the invention.

### DETAILED DESCRIPTION

The following description is presented to enable one skilled in the art to make and use embodiments of the invention, and is provided in the context of a patent application and its requirements. Various modifications to the disclosed embodiments will be readily apparent to those skilled in the art, and the generic principles herein may be applied to other embodiments. Thus, the invention is not intended to be limited to the embodiments shown, but is to be accorded the widest scope consistent with the appended claims and with the principles and features described herein.

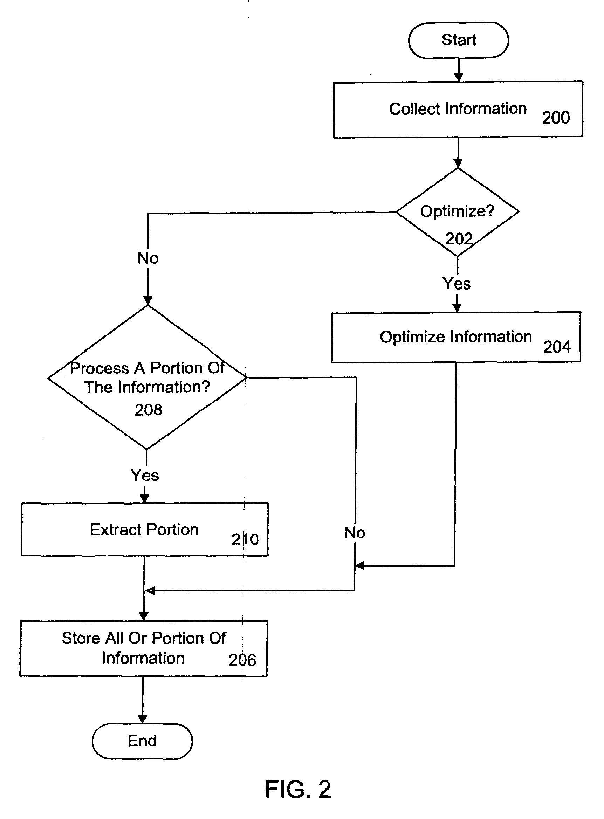

With reference to the figures and in particular with reference to FIG. 2, there is shown a flowchart of a method for treating events and data uniformly in an embodiment in accordance with the invention. Initially information including a time component and a value component is collected, as shown in block 200. The time component represents "events," which includes occurrences of attributes or instants in time. The value component represents "data," which includes the values or magnitudes of various attributes.

An entity, such as a device, a software program, a system, or a combination thereof, collects the information in an embodiment in accordance with the invention. Examples of an entity are a measurement device or a device that monitors data for control purposes. Information may be collected by other types of entities in other embodiments in accordance with the invention.

A determination is then made at block 202 as to whether the collected information can be optimized. For example, a system may be customized for a particular purpose and use only a portion of the collected information. The portion of the information not used is then discarded. For example, in one embodiment in accordance with the invention, some or all of the time component is discarded. In another embodiment in accordance with the invention, some or all of the value component is discarded.

Block 202 may occur at any point in a system. For example, a destination entity, an intermediate entity, or an observer may determine which component to discard. If the information can be optimized, the process passes to bock 204 where the information is optimized. The information is then stored, as shown in block 206. In an embodiment in accordance with the invention, the optimized information is stored. The collected information or both the collected information and the optimized information may be stored in other embodiments in accordance with the invention.

If the information does not have to be optimized, a determination is made at block 208 as to whether only a component or a portion of the information is to be processed. Processing of the information includes, but is not limited to, analysis of the information, storage of the information, or presentation of the information to an observer. In one embodiment in accordance with the invention, an entity processes some or all of the time component. In another embodiment in accordance with the invention, an entity processes some or all of the value component. And in yet another embodiment in accordance with the invention, a portion of the time component and a portion of the value component is processed by an entity.

Like block 202, block 208 may occur at any point in a system. For example, a destination entity, an intermediate entity, or an observer can determine which component or portion of information to process. In some embodiments in accordance with the invention, the determination is delayed as late as possible in order to preserve opportunities to access or use one or both components.

If a component or portion of information is to be processed, the component or portion is extracted from the collected information and processed at block 208. The data is then stored, as shown in block 206. In an embodiment in accordance with the invention, the collected information is stored. The extracted information or both the collected and extracted information may be stored in other embodiments in accordance with the invention. Returning again to block 208, if a component or portion will not be processed, the process passes to block 206 where the collected information is stored.

Embodiments in accordance with the invention may perform some or all of the blocks illustrated in FIG. 2. Furthermore, embodiments in accordance with the invention may add functions or processes to the method depicted in FIG. 2. And finally, embodiments in accordance with the invention may perform the blocks in a different order than the one shown in FIG. 2.

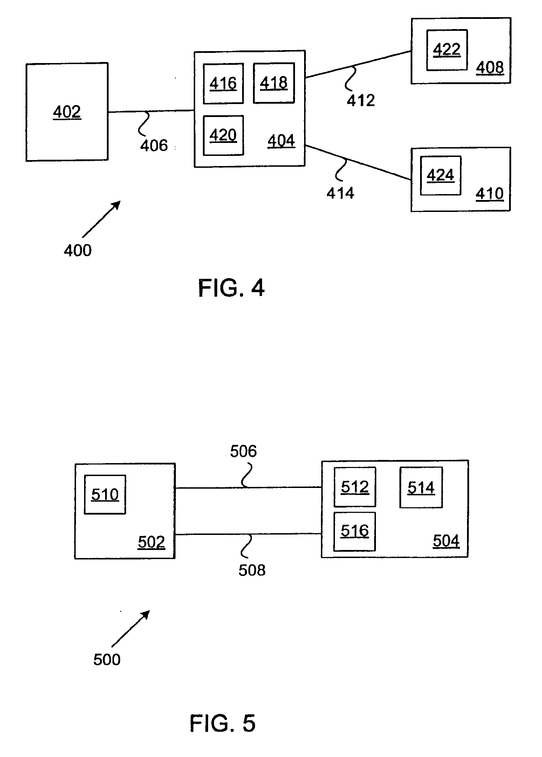

FIG. 3 is a graphical illustration of information in an embodiment in accordance with the invention. As discussed earlier, information 300 includes time component 302 and value component 304. Value component 304 includes one or more attributes, which may include quantity, magnitude, and model parameters. Model parameters may be configured as one or more mathematical equations, collections of points, and any other method for representing a value.

Time component 302 includes records 306, 308. Records 306, 308 provide time and duration information. Together records 306, 308 represent time as an interval of time. For example, time component 302 may describe the interval over which value component 304 occurred or the interval just before or after the occurrence of value component 304.

In one embodiment in accordance with the invention, record 306 may be a time at which collection of an attribute started and record 308 may describe an amount of time the attribute remained at a particular value. In another embodiment in accordance with the invention, record 306 may be configured as a time at which collection of an attribute started and record 308 as a time at which collection of an attribute ended. And in yet another embodiment in accordance with the invention, record 306 may define a time at which collection of an attribute ended and record 308 as an amount of time the attribute remained at a particular value.

Referring now to FIG. 4, there is shown a first system for treating time and value components uniformly in an embodiment in accordance with the invention. System 400 includes collection entity 402 and intermediate entity 404. Collection entity 402 captures information and transmits the information over connection 406. Connection 406 may be configured, for example, as a direct connection to intermediate entity 404 or as one or more wired or wireless networks. Connection 406 may also be configured as a low latency, low throughput channel or as a high latency, high throughput channel, depending on the application.

In one embodiment in accordance with the invention, intermediate entity 404 analyzes the collected information and determines whether a portion of the information is to be processed by one or both downstream entities 408, 410. For example, in one embodiment in accordance with the invention, entity 408 processes the time component while entity 410 processes one or more attributes in the value component. In another embodiment in accordance with the invention, entity 408 processes both the time and value components and entity 410 processes the time component. In yet another embodiment in accordance with the invention, both entities 408, 410 process both components. Interpretation of the collected information is determined by the application, and different determinations may be made in other embodiments in accordance with the invention.

Based on its interpretation of the collected information, entity 404 transmits the information or a portion of the information to entity 408 via connection 412 and to entity 410 via connection 414. Entity 404 may also store the collected information or a portion of the information in storage 416. Like connection 406, each connection 412, 414 may be configured, for example, as a direct connection or as one or more wired or wireless networks. Connection 412 and connection 414 may also be configured as a low latency, low throughput channel or as a high latency, high throughput channel, depending on the application.

In another embodiment in accordance with the invention, intermediate entity 404 includes one or more output devices 418, including a display, and one or more input devices 420. The collected information is displayed to an observer on the display 418. The observer uses one or more of the input devices 420 to select a portion of the information. For example, the observer may use a pointing device, such as a mouse or stylus, to select a portion of the information for further processing by one or both downstream entities 408, 410. Entities 408, 410 may also store the information or portions of the information in storages 422, 424, respectively.

Each entity 402, 404, 408, 410 may be implemented as a device, a software program, a system, or some combination thereof. For example, entity 402 may be configured as a measurement device or as a monitoring device. And processing of the information or a portion of the information may include, but not be limited to, analysis, presentation, or storage of some or all of the information.

FIG. 5 is a block diagram of a second system for treating time and value components uniformly in an embodiment in accordance with the invention. System 500 includes entity 502 connected to entity 504 by connections 506, 508. Entity 502 collects information and transmits the information to entity 504 using one or both connections 506, 508. Connections 506, 508 may each be configured as a low latency, low throughput channel or as a high latency, high throughput channel, depending on the application. Entity 502 may also store the information in storage 510 before transmitting the information to entity 504.

In one embodiment in accordance with the invention, entity 502 collects and analyzes the information and transmits only the information entity 504 processes. For example, entity 504 may process only the time component of the information, so entity 502 transmits the time component to entity 504 using low latency, low throughput connection 506. In another embodiment in accordance with the invention, entity 502 collects the information and transmits the time component to entity 504 over low latency, low throughput connection 506 and transmits the value component over high latency, high throughput connection 508. And in another embodiment in accordance with the invention, entity 502 collects the information and transmits both the time and value component to entity 504 using high latency, high throughput connection 506. Entity 504 then analyzes the information and processes all or portions of the information.

In yet another embodiment in accordance with the invention, entity 504 includes one or more output devices 512, including a display, one or more input devices 514, and storage 516. The collected information is displayed to an observer on display 512 and the observer uses one or more of the input devices 514 to select a portion of the information. For example, the information may be displayed in a user interface and the observer uses a pointing device, such as a mouse or stylus, to select a portion of the information for further processing. Alternatively, the observer may select a portion of the information to discard. The portion of the information to be processed or the collected information may also be stored in storage 516.

Thus, information is collected with both a time component and a value component in embodiments in accordance with the invention. And the time component is represented as an interval of time. In one embodiment in accordance with the invention, both components are stored or processed, or both stored and processed. In another embodiment in accordance with the invention, a portion of the information or a portion of a component are stored or processed, or both stored and processed. The determination of which portion of the information or which component an entity processes can be made at any time after the information is captured. In some embodiments in accordance with the invention, the determination is delayed as late as possible in order to preserve opportunities to access or use one or both components.

## Claims

1. A method for handling information, comprising:
collecting information (300) comprised of a time component (302) and a value component (304); and
transmitting the information (300) over one or more connections (406).

2. The method of claim 1, further comprising:
determining whether a portion of the information is to be processed during or after the transmission of the information (300) over the one or more connections (406); and
if a portion of the information is to be processed, extracting the portion of information.

3. The method of claim 2, further comprising storing the extracted portion of the information.

4. The method of claim 3, further comprising storing the non-extracted portion of the information with the extracted portion of the information.

5. The method of one of claims 1-4, wherein the time component (302) is comprised of a first record (306) and a second record (308).

6. A system, comprising:
a collection entity (402) for collecting information (300) comprised of a time component (302) and a value component (304); and
one or more connections (406) for transmitting the information (300) to one or more downstream entities.

7. The system of claim 6, wherein the one or more downstream entities comprises a destination entity (408) for receiving at least a portion of the information collected by the collection entity (402).

8. The system of claim 7, wherein the one or more downstream entities further comprise an intermediate entity (404) positioned between the collection entity (402) and the destination entity (408) for receiving the information (300) from the collection entity (402), extracting a portion of the information, and transmitting the portion of the information to the destination entity (408).

9. The system of one of claims 6-8, further comprising:
an output device (418) to present the information (300) to an observer; and
an input device (420) to allow the observer to select a portion of the information.

10. The system of one of claims 6-9, wherein the time component (302) is comprised of a first record (306) and a second record (308).
